# EUROPEAN PATENT APPLICATION

(11) **EP 2 745 707 A1**
(43) Date of publication of application: **25.06.2014**
(21) Application number: 12198725.9
(22) Date of filing: 20.12.2012
(51) Int. Cl.: A23L 1/305, A23C 21/00, A23C 21/06, A23C 21/08, A23C 9/142

(54) **A nutraceutical compound**

(71) Applicant: Promo Pharma S.p.A., 47892 Acquaviva (SM)
(72) Inventor: Senise, Sergio, 54100 Massa (MS) (IT)
(74) Representative: Lunati & Mazzoni S.r.L.

(57) **Abstract**

A nutraceutical compound (1) comprising whey protein (2); and a mixture of amino acids (4) comprising L-arginine (4a), L-tryptophan (4b), Taurine (4c), L-cysteine (4d), Hydroxyproline (4e), Citrulline (4f) and L-carnitine (4g).

## Description

The present invention relates to a nutraceutical compound of the type as recited in the preamble of Claim 1.

In particular, the invention concerns a particular compound suitable for use in the preparation of dietary supplements (for example beverages, foods), pills or other similar products suitable for use in regulating the functions of the human body.

As is known, nutraceutical compounds are frequently used to produce supplements capable of providing a person with nutritional components that can improve their performance during physical activity, or of providing substances which would otherwise be lacking due, for example, to an unbalanced slimming diet.

In detail, in the former case the supplements currently available on the market are based on protein and sugars with appropriate additions of vitamins, usually belonging to groups B, C and E, and/or mineral salts (sodium, potassium, magnesium) so as to obtain a compound capable of delivering a constant and prolonged release of energy, but also of replacing the substances used up during the physical activity.

In the latter case, the nutraceutical compounds and, thus, the supplements suitable for making up for any deficiencies, due for example to the particular dietary regimen, differ depending on the substances to be integrated.

The nutraceutical compounds used in this case are characterised by a high protein content to which, for example, the following may be added, depending on the specific requirements: ginseng, royal jelly, blueberry; or ginseng, guarana and freeze-dried royal jelly.

The prior art described above has several significant drawbacks.

A first important drawback consists of the fact that they are particularly high in proteins which, due to their complex structure, are not correctly used by the body.

Said drawback is particularly important in diets where, owing to the need to reduce/eliminate many kinds of food, protein supplement is essential for the organism. As a consequence, in this case, the fact that the protein is not easily assimilated may result in significant deficiencies.

Another drawback is given by the fact that the compounds currently in use, despite their high protein content, are not able to completely satisfy the requirements/needs of the body.

A further drawback consists of the fact that said unused protein must be eliminated via the kidneys, which puts strain on the kidneys and could lead to serious kidney failure.

In this situation the technical purpose of the present invention is to devise a nutraceutical compound able to substantially overcome the drawbacks mentioned above.

Within the sphere of said technical purpose one important aim of the invention is to provide a nutraceutical compound that is easily assimilated.

Another important aim of the invention is to obtain a nutraceutical compound capable of making an appropriate nutritional contribution to the diet.

The technical purpose and specified aims are achieved with a nutraceutical compound as claimed in the appended Claim 1.

Preferred embodiments are described in the dependent claims.

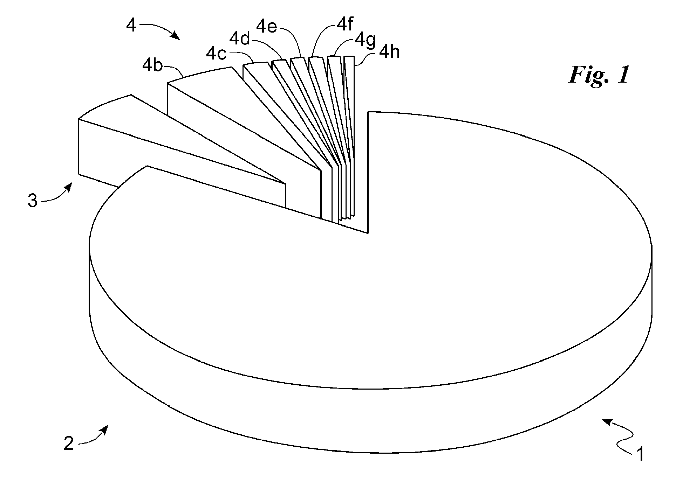

The characteristics and advantages of the invention are clearly evident from the following detailed description of a preferred embodiment thereof, with reference to **Fig. 1** which shows a graphical display of the composition of the nutraceutical compound according to the invention.

With reference to said drawings, reference numeral **1** globally denotes the nutraceutical compound according to the invention.

It primarily comprises whey protein **2**, at least one saline component **3** and a mixture of amino acids **4**.

In particular, the whey protein 2 is, preferably, micro-filtered whey protein and, more preferably, ultra-micro-filtered whey protein.

Said ultra-micro-filtered whey protein 2 is present, with a content that is substantially more than 67%, preferably substantially comprised between 75% and 90%, more preferably, substantially comprised between 80% and 85%, and yet more preferably substantially equal to 83.6% of the nutraceutical compound 1.

The saline component 3 comprises ornithine alpha-ketoglutarate the content of which is substantially less than 8%, in particular substantially comprised between 6.5% and 3.5%, more in particular, substantially comprised between 5.8% and 4% and, yet more in particular, substantially equal to 5.02% of the nutraceutical compound 1.

The mixture of branched-chain amino acids 4 comprises one or more and, preferably, all of the following components: L-arginine **4a,** L-tryptophan **4b,** Taurine **4c,** L-cysteine **4d,** Hydroxyproline **4e,** Citrulline **4f,** L-carnitine **4g.**

The content of L-arginine 4a in the nutraceutical compound 1 is substantially less than 8%, in particular substantially comprised between 6.5% and 3.5%, more in particular, substantially comprised between 5.8% and 4% and, yet more in particular, substantially equal to 5.02%. Preferably, the content of L-arginine 4a is substantially equal to the content of the saline component 3 and, precisely, to the content of ornithine alpha-ketoglutarate.

The quantity of L-tryptophan 4b in the compound 1 is substantially less than 2.5%, in particular, substantially comprised between 2% and 1% and, more in particular, substantially comprised between 1.8% and 1.4% and, yet more in particular, substantially equal to 1.68% of the nutraceutical compound 1.

The content of Taurine 4c, L-cysteine 4d, Hydroxyproline 4e, Citrulline 4f is, for each of said amino acids, substantially less than 2%, in particular, substantially comprised between 1.5% and 0.5% and, more in particular, substantially comprised between 1.2% and 0.8%. Preferably, L-tryptophan 4b, Taurine 4c, L-cysteine 4d, Hydroxyproline 4e, Citrulline 4f are present in the nutraceutical compound 1 substantially in the same percentages and, more preferably, with a percentage substantially equal to 1.01 %.

Lastly, the quantity of L-carnitine 4g is substantially less than 1.5%, in particular, substantially comprised between 1% and 0,4%, more in particular, substantially comprised between 0.8% and 0.55% and, more in particular, substantially equal to 0.669% of the nutraceutical compound 1.

The invention achieves some important advantages.

A first important advantage lies in the high absorbability of the nutraceutical compound 1 by the body and, thus, the exceptional efficacy of the nutraceutical compound 1.

In particular, said high absorbability has been innovatively achieved by combining the ultra-micro-filtered whey protein 2, which stimulates protein synthesis by the body, with the mixture of amino acids 4 which, by joining to form a protein portion, are more easily absorbed by the body.

Moreover, the compound 1 is more easily assimilated than those known in the prior art also owing to the higher concentration of protein and, more precisely, due to the fact that the whey protein 2 is filtered to a very high level and has a high protein concentration.

Other advantages derive from the particular choice of components and, in addition, to their content which characterise the nutraceutical compound 1.

In particular, thanks to the presence and specific content of L-arginine 4a, the compound 1 physiologically stimulates the production of growth hormone GH and, thus, growth of the body, the reproduction system and the immune system. Said actions of the L-arginine 4a are, in addition, enhanced by the presence of Citrulline 4f which, as well as stimulating the immune system, also promotes L-arginine 4a metabolism.

Moreover, the ornithine in the saline component 3, which also stimulates the secretion of growth hormone, works in synergy with the L-arginine 4a to further enhance the aforesaid effects.

The presence of the saline component 3 also enhances the action of the L-tryptophan 4b and of the Taurine 4c, thus increasing the effects of these on muscle and nerve tissue and on mood, reducing, for example, the feeling of hunger during a diet.

In particular, the action on the nervous system is increased by the presence of glutamine, contained in the saline component 3, which facilitates detoxification of metabolic waste.

The action of the L-arginine 4a on the immune system is enhanced by the L-cysteine 4d which also acts on said immune system and thus strengthens the effects thereof.

A significant role is played by the L-carnitine 4g which, by facilitating the transport of fatty acids and promoting their use to produce energy, is of fundamental importance in low-calorie diets or when practising sports.

The action of the L-carnitine 4g thus supports that of the other components of the nutraceutical compound, described in detail above.

The particular and innovative mixing ratio of the various components of the nutraceutical compound is a fundamental aspect of the advantages described above and, in particular, of the actions performed by the various components, as it enhances and maximises the aforesaid synergies between the various elements.

Modifications and variations may be made to the invention described herein without departing from the scope of the inventive concept. All the elements as described and claimed herein may be replaced with equivalent elements and the scope of the invention includes all other details, materials, shapes and dimensions.

## Claims

1. A nutraceutical compound (1) comprising whey protein (2); and **characterised in that** it comprises a mixture of amino acids (4) comprising L-arginine (4a), L-tryptophan (4b), Taurine (4c), L-cysteine (4d), Hydroxyproline (4e), Citrulline (4f) and L-carnitine (4g).

2. A nutraceutical compound (1) as claimed in claim 1, comprising a saline component (3) comprising ornithine alpha-ketoglutarate.

3. A nutraceutical compound (1) as claimed in claim 2, wherein the content of said ornithine alpha-ketoglutarate is comprised substantially between 5.8% and 4% of said nutraceutical compound (1).

4. A nutraceutical compound (1) as claimed in one or more of the preceding claims, wherein the content of said L-arginine (4a) is substantially comprised between 5.8% and 4%.

5. A nutraceutical compound (1) as claimed in claim 1 or 2, wherein said content of said L-arginine (4a) is substantially equal to said content of said ornithine alpha-ketoglutarate.

6. A nutraceutical compound (1) as claimed in one or more of the preceding claims, wherein the content of said L-tryptophan (4b) is substantially comprised between 1.8% and 1.4%.

7. A nutraceutical compound (1) as claimed in one or more of the preceding claims, wherein the content of each of said Taurine (4c), of said L-cysteine (4d), of said Hydroxyproline (4e) and of said Citrulline (4f) is substantially comprised between 1.2% and 0.8%.

8. A nutraceutical compound (1) as claimed in one or more of the preceding claims, wherein the content of said L-carnitine (4g) is substantially comprised between 0.8% and 0.55%.

9. A nutraceutical compound (1) as claimed in one or more of the preceding claims, wherein said whey protein (2) is ultra-micro-filtered and present with a content substantially comprised between 75% and 90%.

10. A nutraceutical compound (1) as claimed in one or more of claims 2-9, wherein said content of said whey protein (2) is substantially equal to 83.6%; wherein said content of said ornithine alpha-ketoglutarate is substantially equal to 5.02%; wherein said content of said L-arginine (4a) is substantially equal to 5.02%; wherein said content of said L-tryptophan (4b) is substantially equal to 1.68%; wherein said content of said Taurine (4c) is substantially equal to 1.01%; wherein said content of said L-cysteine (4d) is substantially equal to 1.01%; wherein said content of said Hydroxyproline (4e) is substantially equal to 1.01%; wherein said content of said Citrulline (4f) is substantially equal to 1.01%; and wherein said content of said L-carnitine (4g) is substantially equal to 0.669%
